(19)

Europäisches
Patentamt
European
Patent Office
Office européen
des brevets

(11) **EP 4 439 893 A1**

(12) **EUROPEAN PATENT APPLICATION**

(43) Date of publication:
**02.10.2024 Bulletin 2024/40**

(21) Application number: **23382307.9**

(22) Date of filing: **30.03.2023**

(51) International Patent Classification (IPC):
***H02G 13/00*** *(2006.01)*

(52) Cooperative Patent Classification (CPC):
**H02G 13/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Chifarelli, Armando Francisco
2420 Lambare (PY)**

(72) Inventor: **Chifarelli, Armando Francisco
2420 Lambare (PY)**

(74) Representative: **Durán-Corretjer, S.L.P.
Còrsega, 329
(Paseo de Gracia/Diagonal)
08037 Barcelona (ES)**

Remarks:
Claims filed after the date of filing of the application
(Rule 68(4) EPC).

(54) **LIGHTNING PROTECTION DEVICE USING ELECTRIC FIELD COMPENSATION WITH OPEN
CAPACITOR**

(57)     Lightning protection device, said device comprising a support mast, means for connection to a structure, situated at a proximal end, and an upper main head, situated at a distal end, which comprises a first pair of electrodes separated by a first dielectric, one of said first pair of electrodes being connected to earth via an earth connection cable, and the other electrode being a floating electrode, such that there can be a difference in potential between the two electrodes, said device also comprising a second pair of electrodes, one of said second pair of electrodes also being connected to earth and the other electrode being a floating electrode, that is to say being electrically insulated from the rest of the components of the device by means of an insulating material, such that there can be a difference in potential between the two electrodes, wherein the second pair of electrodes forms an open capacitor.

Fig.1

## Description

The present invention discloses a lightning protection device. More specifically, the present invention discloses a lightning protection device using electric field compensation with dual capacitor.

Lightning forms owing to the appearance of an electrical charge (with this electrical charge being negative in the majority of storms) in cumulonimbus clouds. This charge is attracted by the positive charge of the earth's surface. When this electrical charge is high, it is frequently possible that a lightning bolt or downward leader between the electrical charge of the cumulonimbus cloud and that of the ground will form. In other cases, the cumulonimbus clouds have a positive electrical charge whilst the earth's surface has a negative electrical charge, with the lightning bolt formed in this case being an upward leader.

Lightning protection devices which act as electric and/or electromagnetic field protectors are known. These lightning protectors, also called electric field protectors, electromagnetic field compensators or multiple electromagnetic field compensators are passive collector systems which at all times balance and deionize the effects of atmospheric phenomena by means of a part thereof which acts as a capacitor.

These devices for controlling the electromagnetic field comprise two electrodes separated by a dielectric, with one of these electrodes, usually the lower electrode, being connected to earth and with this having the same charge as the earth. This configuration of electrodes allows the lightning rod, by means of its electrode not connected to earth, usually the upper electrode, to attract the electrical charge of the electromagnetic field of the cumulonimbus clouds. As a result, there is a difference in potential between the electrodes in these devices.

This lightning protector acts as a capacitor, the main function of which is to attract atmospheric charges within its radius of coverage by diverting it constantly to earth, resulting in small leaks or diversions of current via the dielectric, allowing the electromagnetic field to be discharged via small, harmless, milliampere current leaks, avoiding the formation of the upward or downward leader (lightning bolt). Its operating principle is thus based on compensating for and establishing the electromagnetic field existing within its area of protection, thereby cancelling out the formation of the upward leader, neutralizing the lightning bolt, draining the electric fields to earth, in the form of low-intensity currents, with this current being harmless to people and equipment. The flow of charges from the atmosphere to earth allows the equipment to prevent and/or hamper the formation of the lightning bolt. One main advantage of this type of lightning rod device is that they generate a protective shield or area in their coverage area.

The electromagnetic field compensator carries out a constant drainage process under its radius of action;

the time at which the greatest drainage takes place is when the field is charged and this occurs at times when dark clouds are present (moments before, during and after an electrical storm).

The main difference with traditional lightning rods is that said traditional lightning rods attract the lightning bolt so that the upward or downward leader is created between the cumulonimbus cloud and the tip of the lightning rod. Devices for controlling the electromagnetic field have the advantageous effect of neither exciting nor capturing the lightning bolt, but instead they act by attracting the charges at their upper electrode and gradually discharging these, as well as avoiding the electrical risks deriving from a lightning strike, preventing the device from being struck. In addition, no electromagnetic compatibility effects are caused. These devices enable any type of structures and environments at risk of fire or explosion to be protected.

Dual head lightning protection devices are also known, where a main upper head has an earthed electrode and a floating electrode, with potential equal to that of the surrounding atmosphere, and a secondary head with a similar configuration, wherein the floating electrode of the secondary head and the earthed electrode of the main head are adjacent and are separated in the central part thereof, by an insulating material. With this configuration, the main head is supported by the secondary head, achieving a greater total charge storage capacity. This is due to the fact that both heads which perform the function of capacitor are arranged in parallel.

In the context of this invention, the expressions "lower", "below" and "upper" are to be understood in the context of a user observing the device being installed in normal operation, with the longitudinal axis of the device coinciding with the vertical axis referenced to earth and with the main head at the highest part.

More specifically, the present invention discloses a lightning protection device, said device comprising a support mast, means for connection to a structure, situated at a proximal end, and an upper main head, situated at a distal end, which comprises a first pair of electrodes separated by a first dielectric, one of said first pair of electrodes being connected to earth via an earth connection cable, and the other electrode being a floating electrode, such that there can be a difference in potential between the two electrodes. The device also comprises a second pair of electrodes. One of said second pair of electrodes is also connected to earth, and the other electrode is a floating electrode, that is to say it is electrically insulated from the rest of the components of the device by means of an insulating material, such that there can be a difference in potential between the two electrodes. The particular feature of this device is that the second pair of electrodes forms an open capacitor.

In the context of this invention, the expressions "lower", "below", "proximal", "distal" and "upper" are to be understood in the context of a user observing the device being installed in normal operation, with the longitudinal axis of the device coinciding with the vertical axis referenced to earth, that is to say the radial direction of the earth's sphere, and with the main head at the highest part.

A configuration with two capacitors, one in the form of an upper main head and the other being a pair of electrodes which form an open capacitor, wherein the effect of the dielectric is performed by the air surrounding the device, with each capacitor having an earthed electrode, that is to say earth potential, and another floating electrode, that is to say potential of the atmosphere or air surrounding it, allows the total or equivalent charge storage capacity to be increased significantly. With the described configuration, the capacitors act as two capacitors in parallel. This is, therefore, equivalent to a capacitor whose capacity or capacitance is equal to the sum of both capacitors separately.

$$Ce = C1 + C2$$

The open capacitor formed by the second pair of electrodes is supported on the main head, taking care of a more rapid diversion of charge to earth, such that this allows greater charge storage, and consequently the creation of a greater electric field, by said main head. In addition, in turn, the second pair of electrodes forms a secondary capacitor which also provides, with its own charge storage, its own electric field which, together with the electric field generated by the main head, forms the total electric field generated by the device. The fact that said capacitor is open facilitates the maintenance thereof, since it allows possible imperfections to be detected more easily and allows the components thereof to be replaced more simply. Moreover, since the secondary capacitor is open, this allows discharges from said capacitor to be produced upon breakage of the dielectric without a critical increase in temperature. This is due to the fact that if the charge of the capacitor is too great and the difference in potential causes a breakage of the dielectric, the charges travel via the dielectric, which is air, from one electrode to another. In the case of a closed capacitor, the breakage of the dielectric would cause a large increase in the temperature inside, which could cause burns to the dielectric or, in the case of breakage of the air enclosed within the capacitor, could result in a large increase in the pressure inside, which could break it. In this case, with an open capacitor, the temperature increases abruptly as it is converted into plasma, but this dissipates very rapidly in the surroundings thereof.

Preferably, the floating electrode of the second pair of electrodes has the form of a flat disc.

Preferably, the earthed electrode of the second pair of electrodes has the form of a flat disc.

With this configuration of the open secondary capacitor, it is not necessary, inter alia, to try to make said capacitor leaktight, with all of the complications that this involves. This allows a greater simplicity of the components and fewer design restrictions in forming the secondary capacitor and thus the device. The simplicity of these components, such as in the case of the electrodes being flat discs, contributes to a saving on material and to a simpler installation and manufacture, among other advantages.

The earthed electrode of the main head is the lower electrode and the floating electrode is the upper electrode.

Preferably, the second pair of electrodes is situated below the main head, the floating electrode of said second pair of electrodes being between the earthed electrode of the main head and the earthed electrode of the second pair of electrodes.

The fact that the floating electrodes of each capacitor are located above the earthed electrode of the capacitor of which they form part means that said floating electrode at atmospheric or air potential to a certain extent compensates for the charge accumulated in the earthed electrodes, such that the actuation of said electrodes as lightning attractors is made more difficult, and therefore the device is protected in its most vulnerable parts or the parts more predisposed to form lightning leaders.

Preferably, the second pair of electrodes is configured so that its dielectric effect is broken with a lower difference in potential than the main head.

The difference in potential or voltage that a capacitor is capable of withstanding without breaking and allowing the discharge between the two electrodes depends on distinct factors, such as the dimensions of the electrodes, the distance between the electrodes and the material that performs the dielectric function between them. Taking into account said factors, it can be achieved that a capacitor breaks with greater or lesser difference in potential between its electrodes. This means that a capacitor capable of resisting a lesser voltage balances its charge with the passage of its electrons via the dielectric before the other. In this way, the secondary capacitor makes it possible to divert a large quantity of charge, when this is very high, while protecting the main head from possible breakage.

Preferably, the floating electrode of the second pair of electrodes has a greater diameter than the earthed electrode of said second pair of electrodes.

Preferably, the floating electrode of the second pair of electrodes has a greater thickness than the earthed electrode of said second pair of electrodes.

The effect of compensating for the accumulated charge in the earthed electrodes is boosted by the greater dimension of the floating electrode, creating a kind of "umbrella effect", especially with the smaller earthed electrode situated below, owing to the fact that the coverage of its electric field is somewhat broader.

Preferably, the insulating material that insulates the floating electrode of the second pair of electrodes comprises at least two parts.

More preferably, the second pair of electrodes comprises two parts, one part which separates the floating electrode of the second pair of electrodes from the earthed electrode of the second pair of electrodes and another part which separates the floating electrode of the second pair of electrodes from the mast and the earthed electrode of the main head.

The provision of two parts, one for each function and separation of the floating electrode, means that the maintenance of the device is simpler and more economical since, in the event of any part failing, only the part in question has to be replaced or repaired.

Alternatively, the second pair of electrodes comprises three parts, one part which separates the floating electrode of the second pair of electrodes from the earthed electrode of the second pair of electrodes, a part which separates the floating electrode of the second pair of electrodes from the mast and a part which separates the floating electrode of the second pair of electrodes from the earthed electrode of the main head.

For this case, having a single part which performs all of the separation functions for the floating electrode of the second pair of electrodes results in a more economical design and manufacture process, without changing the functionality of the device.

Preferably, the electrodes of the main head each comprise an annular projection arranged around their respective central projection, said annular projection projecting in the direction towards the other electrode.

The combination of a central projection and an annular projection around said central projection situated on each electrode of the main head, projecting towards the other electrode of the main head, causes the electric field inside the head, which acts as a capacitor, to significantly increase as compared with a configuration without said annular projection, such that the capacity or capacitance of the capacitor is increased. This configuration allows a greater attraction between the opposing charges stored in each electrode, allowing a greater amount of charge to be stored in the electrodes. The minimum distance between the electrodes is found at the edges. The dielectric material is situated between said edges, such that the central part of the heads is hollow, with only air performing the dielectric function. Said device protects against lightning by diverting charges to earth in a controlled manner and, in turn, by generating its own electric field, capable of altering and stabilizing the electric field around it, which also protects electronic elements close to the device that may be damaged by electromagnetic pulses.

More preferably, the central projections have a hemispherical shape.

Even more preferably, the annular projection of each electrode has a semitoroidal shape.

The configuration with central projections and annular projections around said central projections affords a significant improvement in the efficiency of the device, as opposed to one which does not comprise the annular projections around its respective central projections. By means of tests for generating electromagnetic fields, both in direct current and alternating current, the effect that said feature contributes to the present invention has been verified. The response of a pointed lightning rod known from the prior art has been compared with another lightning protection device using electric field compensation according to the present invention and a lightning protection device using electric field compensation, with the same features as the present invention but which does not comprise the ringshaped projections. In these tests, it has been seen how the lightning protection device according to the invention greatly improves the response of a conventional lightning rod and significantly improves the result obtained with the device which does not comprise the annular projections. These tests were conducted via the artificial generation of electromagnetic fields around each device and by observing the response that each device provides with respect to said electric and magnetic fields, measuring the total alteration of the electromagnetic field because of the presence of each device and seeing to what extent each device withstands the effect of an electric field in its surroundings, simulating an electrical storm, without the formation of leaders of a lightning bolt.

In a preferred embodiment, the lightning protection device comprises at least one drainage plug.

In a more preferred embodiment, the at least one drainage plug is situated on the main head.

The presence of a drainage plug serves, inter alia, for monitoring the humidity and generation of liquid inside the heads and for being able to drain said generated liquid, for example as a result of condensation, from inside the heads. This allows improved functioning of the device, facilitating the capacity or capacitance of the capacitor or head by maintaining a dry atmosphere inside, which promotes the dielectric effect, both of the air and of the dielectric material, between the electrodes.

For a clearer understanding of the present invention, drawings illustrating an exemplary embodiment of the present invention are attached by way of explanatory but non-limiting example.

Figure 1 shows a lightning protection device using electric field compensation according to the present invention.

Figure 2 shows a view in section of the device of of Figure 1.

Figure 3 shows a detail view in section of the second pair of electrodes.

Figure 4 shows a perspective view of the lightning protection device according to the present invention.

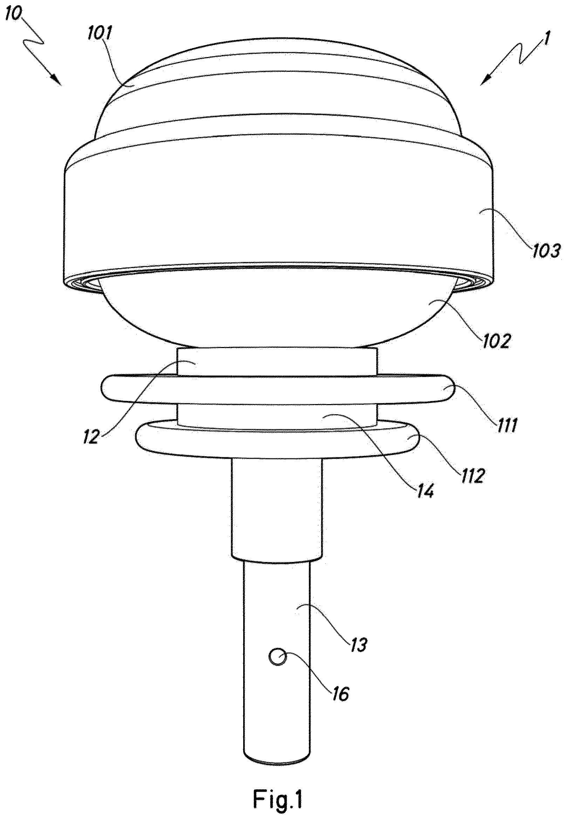

Figure 1 shows, in a perspective view in front elevation, a lightning protection device 1 using electric field compensation with dual capacitor. It can be seen that the device 1 comprises a main head 10, comprising a first pair of electrodes 101 and 102 and a dielectric 103, and another open capacitor comprising a second pair of electrodes 111 and 112. The main head 10 comprises an upper floating electrode 101, that is to say at the same potential as the atmosphere or air surrounding it, a lower electrode 102 connected to earth, that is to say at earth potential, and an annular dielectric material 103 which separates the upper electrode 101 and the lower electrode 102. The electrodes 101 and 102 have a general bowl shape and face one another, and therefore the edges of said electrodes 101 and 102 are the points of least distance between the electrodes. The annular shape of the dielectric material 103 allows the two electrodes 101 and 102 to be separated and insulated, precisely by the edges. In this figure, it can be seen how they are each secured to a mast 13 and separated by an insulator 14 between the electrode 111 and the electrode 112. Similarly to the main head 10, the open secondary capacitor which comprises the second pair of electrodes 111 and 112 comprises a floating upper electrode 111 and an earthed lower electrode 112. In this case, the two electrodes 111 and 112 are separated by an insulating material 14, but only in the most central part of said electrodes. The rest of the surface of the electrodes 111 and 112 is only separated by the surrounding air of the device 1. This causes the dielectric effect between the second pair of electrodes to be created by the very air surrounding the device 1. The mast 13 which supports the other elements of the device 1 is located below the lower electrode 112 and comprises means 15 (not shown in this figure) and 16 for connection to an external structure on which the device 1 is installed.

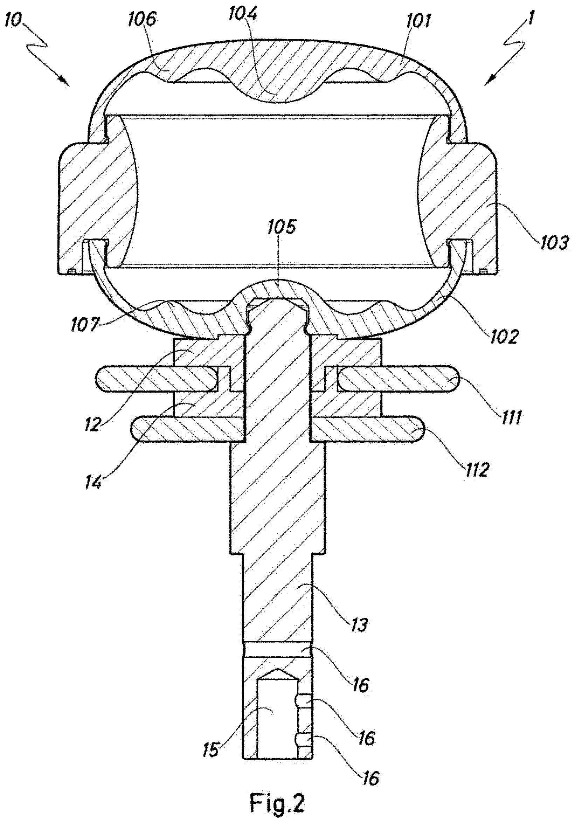

Figure 2 shows, by virtue of this view in section, the internal shape of the electrodes 101 and 102. It can be seen that the electrodes 101 and 102 of the head 10 each comprise a central projection 104 and 105 respectively of substantially hemispherical or cap-shaped form. The projections 104 and 105 face one another such that they project towards one another. Moreover, it can be seen how the electrode 101 comprises another projection 106 with a generally semitoroidal shape which surrounds the central projection 104 and how the electrode 102 comprises another projection 107 also with a generally semitoroidal shape which surrounds the projection 105. Both projections 106 and 107 have a projection distance less than that of the projections 104 and 105 which they respectively surround. Furthermore, the electrodes 111 and 112 are passed through by the mast 13. It can also be seen how the floating electrode 111 is separated from the mast 13 by the insulating materials 12 and 14 which surround said mast 13. The electrode 111 is therefore insulated and the fact that it is a floating electrode is achieved, this electrode being at the potential of the atmosphere surrounding it. It can also be seen how the dielectric material 103 separates the edges of the electrodes 101 and 102, leaving the inside of the head 10 hollow, such that the air which is inside the head is that which performs the dielectric function between the projections 104 and 106 of the electrode 101 and the projections 105 and 107 of the electrode 102. In addition, in the lower part of the figure, the entirety of the connection means 15 and 16 can be seen.

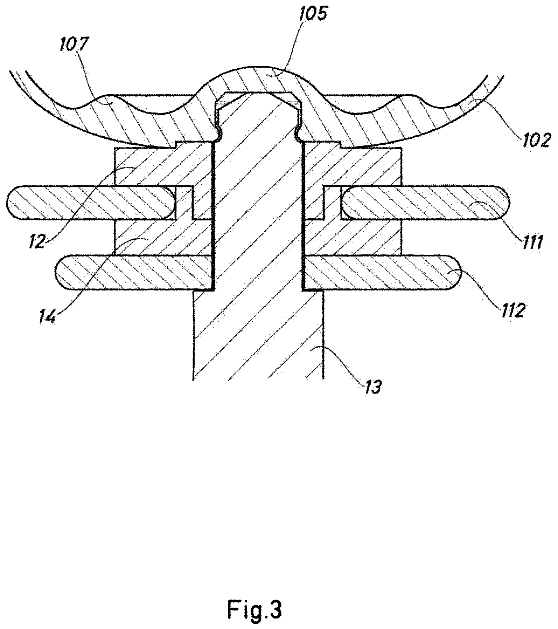

Figure 3 shows the detail of the second pair of electrodes 111 and 112. In this detail figure, it can clearly be seen how the lower electrode 102 of the head 10 is in contact with the mast 13, but the electrode 111 is separated both from the mast 13 and from the electrode 102, by the insulating material 12. This means that the electrode 111 is a floating electrode, it is electrically insulated from nearby elements and therefore it is at the same potential as the air surrounding it. It can also be seen that the insulating material 14 separates the electrodes 111 and 112, in a central part, leaving free the more peripheral part of said electrodes 111 and 112 in the form of discs or rings. In this way, in the most central part of the capacitor which is formed by the two electrodes 111 and 112, the insulation is realized by the insulating material 14, whereas in the more peripheral part it is the air that performs the dielectric function. In the same way, in the figure it can be seen how the electrode 111 has a greater diameter than the electrode 112. In this figure, the projections 105 and 107 of the electrode 102 can also be seen.

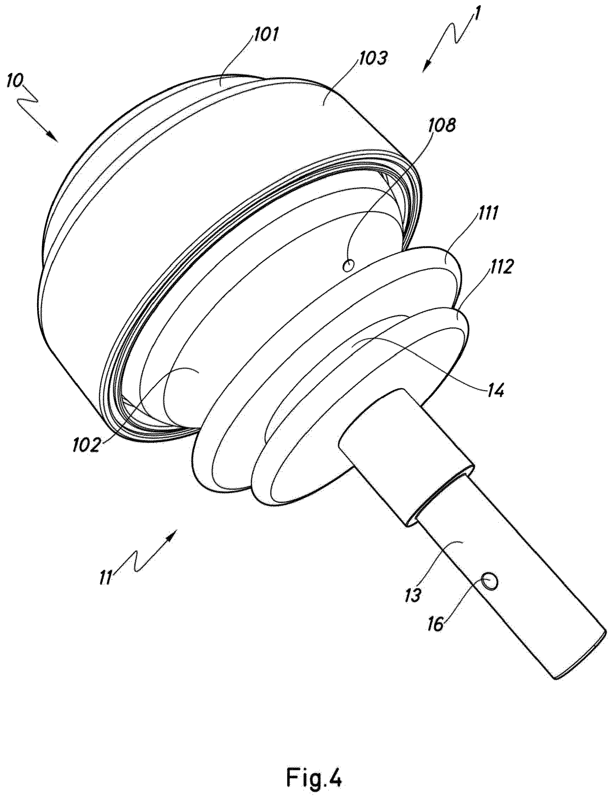

Figure 4 shows another perspective view of the device 1, in which, as well as the elements shown in Figure 1, such as the head 10, the electrodes 101, 102, 111 and 112, the dielectric material 103, the insulating materials 12 and 14, the connection means 16 and the mast 13, a drainage plug 108 can be seen, located in a lower part of the electrode 102.

Although the invention has been described and illustrated with reference to a number of representative examples, it will be appreciated that this exemplary embodiment is in no way limiting on the present invention and therefore any of the variants included, directly or as equivalents, within the content of the attached claims must be considered to be included within the scope of the present invention.

**Claims**

1.  Lightning protection device, said device comprising a support mast, means for connection to a structure, situated at a proximal end, and an upper main head, situated at a distal end, which comprises a first pair of electrodes separated by a first dielectric, one of said first pair of electrodes being connected to earth via an earth connection cable, and the other electrode being a floating electrode, such that there can be a difference in potential between the two electrodes, said device also comprising a second pair of electrodes, one of said second pair of electrodes also being connected to earth and the other electrode being a floating electrode, that is to say being electrically insulated from the rest of the components of the device by means of an insulating material, such that there can be a difference in potential between the two electrodes, **characterized in that** the second pair of electrodes forms an open capacitor.

2. Lightning protection device according to the preceding claim, **characterized in that** the floating electrode of the second pair of electrodes has the shape of a flat disc.

3. Lightning protection device according to either of the preceding claims, **characterized in that** the earthed electrode of the second pair of electrodes has the shape of a flat disc.

4. Lightning protection device according to any of the preceding claims, **characterized in that** in the main head the earthed electrode is the lower electrode and the floating electrode is the upper electrode.

5. Lightning protection device according to any of the preceding claims, **characterized in that** the second pair of electrodes is situated below the main head, the floating electrode of said second pair of electrodes being between the earthed electrode of the main head and the earthed electrode of the second pair of electrodes.

6. Lightning protection device according to any of the preceding claims, **characterized in that** the second pair of electrodes is configured so that its dielectric effect is broken with a lower difference in potential than the main head.

7. Lightning protection device according to any of Claims 2 to 6, **characterized in that** the floating electrode of the second pair of electrodes has a greater diameter than the earthed electrode of said second pair of electrodes.

8. Lightning protection device according to any of Claims 2 to 7, **characterized in that** the floating electrode of the second pair of electrodes has a greater thickness than the earthed electrode of said second pair of electrodes.

9. Lightning protection device according to any of the preceding claims, **characterized in that** the electrodes of the main head each comprise an annular projection, arranged around their respective central projection, said annular projection projecting in the direction towards the other electrode.

10. Lightning protection device according to any of the preceding claims, **characterized in that** the central projections have a hemispherical shape.

11. Lightning protection device according to Claim 9, **characterized in that** the annular projection of each electrode has a semitoroidal shape.

12. Lightning protection device according to any of the preceding claims, **characterized in that** it comprises at least one drainage plug.

13. Lightning protection device according to the preceding claim, **characterized in that** the at least one drainage plug is situated on the main head.

**Amended claims in accordance with Rule 137(2) EPC.**

1. Lightning protection device, said device comprising a support mast, means for connection to a structure, situated at a proximal end, and an upper main head, situated at a distal end, which comprises a first pair of electrodes separated by a first dielectric, one of said first pair of electrodes being connected to earth via an earth connection cable, and the other electrode being a floating electrode, such that there can be a difference in potential between the two electrodes, said device also comprising a second pair of electrodes, one of said second pair of electrodes also being connected to earth and the other electrode being a floating electrode, that is to say being electrically insulated from the rest of the components of the device by means of an insulating material, such that there can be a difference in potential between the two electrodes, **characterized in that** the second pair of electrodes forms an open capacitor, wherein the effect of the dielectric is performed by the air surrounding the device.

2. Lightning protection device according to the preceding claim, **characterized in that** the floating electrode of the second pair of electrodes has the shape of a flat disc.

3. Lightning protection device according to either of the preceding claims, **characterized in that** the earthed electrode of the second pair of electrodes has the shape of a flat disc.

4. Lightning protection device according to any of the preceding claims, **characterized in that** in the main head the earthed electrode is the lower electrode and the floating electrode is the upper electrode.

5. Lightning protection device according to any of the preceding claims, **characterized in that** the second pair of electrodes is situated below the main head, the floating electrode of said second pair of electrodes being between the earthed electrode of the main head and the earthed electrode of the second pair of electrodes.

6. Lightning protection device according to any of the preceding claims, **characterized in that** the second pair of electrodes is configured so that its dielectric effect is broken with a lower difference in potential than the main head.

7. Lightning protection device according to any of Claims 2 to 6, **characterized in that** the floating electrode of the second pair of electrodes has a greater diameter than the earthed electrode of said second pair of electrodes.

8. Lightning protection device according to any of Claims 2 to 7, **characterized in that** the floating electrode of the second pair of electrodes has a greater thickness than the earthed electrode of said second pair of electrodes.

9. Lightning protection device according to any of the preceding claims, **characterized in that** the electrodes of the main head each comprise an annular projection, arranged around a respective central projection, said annular projection projecting in the direction towards the other electrode.

10. Lightning protection device according to any of the preceding claims, **characterized in that** the central projections have a hemispherical shape.

11. Lightning protection device according to Claim 9, **characterized in that** the annular projection of each electrode has a semitoroidal shape.

12. Lightning protection device according to any of the preceding claims, **characterized in that** it comprises at least one drainage plug.

13. Lightning protection device according to the preceding claim, **characterized in that** the at least one drainage plug is situated on the main head.

Fig.1

**Fig.2**

Fig.3

Fig.4

Europäisches
Patentamt

European
Patent Office

Office européen
des brevets

# EUROPEAN SEARCH REPORT

Application Number

EP 23 38 2307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/285248 A1 (MALDONADO PARDO ANTONIO JAVIER [AD]) 29 September 2016 (2016-09-29) * paragraph [0028] – paragraph [0031]; figure 2 * | 1-13 | INV. H02G13/00 |
| Y | WO 2008/084895 A1 (CHUNG YOUNG-KI [KR]) 17 July 2008 (2008-07-17) * paragraph [0032] – paragraph [0045] * | 1-13 | |

TECHNICAL FIELDS
SEARCHED      (IPC)

H02G
H05F
H01T

The present search report has been drawn up for all claims

| Place of search | Date of completion of the search | Examiner |
|---|---|---|
| The Hague | 15 September 2023 | Vantaraki, Anastasia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 38 2307

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | Publication date | Patent family member(s) | | Publication date |
|---|---|---|---|---|---|
| US 2016285248 | A1 | 29-09-2016 | AR | 103970 A1 | 14-06-2017 |
| | | | AU | 2015234349 A1 | 13-10-2016 |
| | | | BR | 112017020188 A2 | 05-06-2018 |
| | | | CA | 2978509 A1 | 29-09-2016 |
| | | | CL | 2017002366 A1 | 29-06-2018 |
| | | | CN | 106028612 A | 12-10-2016 |
| | | | CO | 2017010789 A2 | 10-11-2017 |
| | | | CR | 20170479 A | 13-03-2018 |
| | | | CU | 20170114 A7 | 08-12-2017 |
| | | | DK | 3277059 T3 | 04-11-2019 |
| | | | DO | P2017000210 A | 15-11-2017 |
| | | | EC | SP17070224 A | 29-03-2019 |
| | | | EP | 3277059 A1 | 31-01-2018 |
| | | | ES | 2537275 A1 | 05-06-2015 |
| | | | GT | 201700205 A | 05-12-2018 |
| | | | JP | 6342869 B2 | 13-06-2018 |
| | | | JP | 2016181497 A | 13-10-2016 |
| | | | KR | 20180013858 A | 07-02-2018 |
| | | | LT | 3277059 T | 10-12-2019 |
| | | | MA | 41235 A1 | 31-08-2018 |
| | | | MX | 362434 B | 17-01-2019 |
| | | | MY | 182483 A | 25-01-2021 |
| | | | PE | 20180746 A1 | 27-04-2018 |
| | | | PH | 12017550095 A1 | 12-02-2018 |
| | | | PT | 3277059 T | 08-10-2019 |
| | | | RU | 2017136721 A | 24-04-2019 |
| | | | SG | 11201707694Y A | 30-10-2017 |
| | | | SV | 2017005532 A | 18-05-2018 |
| | | | US | 2016285248 A1 | 29-09-2016 |
| | | | WO | 2016151173 A1 | 29-09-2016 |
| WO 2008084895 | A1 | 17-07-2008 | KR | 100787576 B1 | 21-12-2007 |
| | | | TW | 200841542 A | 16-10-2008 |
| | | | US | 2009308630 A1 | 17-12-2009 |
| | | | WO | 2008084895 A1 | 17-07-2008 |

EPO FORM P0459

For more details about this annex : see Official Journal of the European Patent Office, No. 12/82